# EUROPEAN PATENT SPECIFICATION

(11) **EP 2 711 836 B1**
(45) Date of publication and mention of the grant of the patent: **03.02.2016**
(21) Application number: 12185819.5
(22) Date of filing: 25.09.2012
(51) Int. Cl.: G06F 9/44

(54) **Data distribution system**
Datenverteilungssystem
Système de distribution de données

(43) Date of publication of application: 26.03.2014
(73) Proprietor: RIMES Technologies Limited, London EC3V 3ND (GB)
(72) Inventor: Fauvelais, Christian, London, EC3V 3ND (GB); Mancuso, Frederic, London, EC3V 3ND (GB)
(74) Representative: Ashton, Gareth Mark

(56) References cited:
- US-A1- 2011 296 397

## Description

The present invention relates to a data distribution system, in particular for supplying data from multiple data providers to a client device.

Often a client device requires data from multiple different data sources, each data source providing data in various formats and qualities, which may or may not match the requirements of the client.

A known data distribution system is described in WO 2012/073175, which discloses a service providers-side, a host-side connected to the service providers-side, and a customer-side connected to the host-side. A server at the host-side gathers data from various service providers at the service providers-side, and provides the data to clients at the customer-side. The data is provided to each client according to a user profile that is associated with each client, the user profile specifying what types of data the user is interested in.

US 2011/0296397 discloses a system for managing software packages. The system comprises a package repository, a package server, and a client, which are connected via a network. The client comprises a package manager and the package server can interact with the client to manage the installed packages on the client.

There is a need for more sophisticated data distribution systems that can take data from a variety of data sources and present it to client devices according to client device requirements. In particular, data sources may provide updated versions of their data, client devices may change their data requirements, audits may be carried on previous versions of data requiring checks upon which clients had which data at which times, etc.

Since different client devices use different communication protocols and may enumerate data in different ways, it can be difficult for a client device to maintain lists and request loading of specific data from the server, particular when the client device is not aware of what new data may exist at the server.

It is therefore an object of the invention to improve upon the known art.

According to a first aspect of the invention, there is provided a data distribution system according to any one of the appended claims 1 to 12.

The use of a collection of status attributes for each client means that the server can track the status of each data instance with respect to the client, without the client needing to do this job, or to make requests when the client believes it may be due a new data instance.

The use of the server to track the status of the client device's activity with respect to the data instances by using status attributes, means that the server does not need to understand whichever control protocols the client device uses to identify different data instances, but can simply send the client device whichever data instances the status attributes show have yet to be successfully loaded into the client device.

Furthermore, a single data repository storing only one copy of each data instance can be maintained to cover all of the client devices, without data instances needing to be duplicated for different clients. Each client gets its own individual view of the data instances in the data repository, via the collection of status attributes. For each data instance, a separate status attribute may be stored for each client.

Advantageously, each status attribute may be associated with a specific data instance. Then, the status attribute may be assigned various values to indicate various states of the data instance with respect to the client device.

Each status attribute within the collection of status attributes that is associated with a first one of the client devices, may take values comprising:
- a value indicating that the data instance associated with the status attribute has yet to be loaded by the first one of the client devices; and
- a value indicating that the data instance associated with the status attribute has been loaded by the first one of the client devices.

The collection of status attributes associated with a client device may therefore be used by the server device to inform the client device what data instances have yet to be loaded by the client device and/or to push the unloaded data instances to the client device when the client device indicates it is ready for new data instances to be loaded. For example, a status attribute may have a value of NEW when the corresponding data instance has yet to be loaded by the client, and a value of LOADED when the corresponding data instance has been loaded by the client.

Advantageously, the values of the status attributes may be set by both the server and client device, for example by the server when the status attribute is set to NEW, and by the client when the status attribute is set to LOADED. The status attribute is therefore usable by both the server and the client device to perform two-way communication between the server and the client device. The status attribute therefore provides a very simple communication protocol which can be used by the server and client device to automatically co-ordinate the loading of new data instances to the client device without human intervention.

The values of the status attributes may define a to-do list of actions to be automatically taken by the client device. For example, a client device may automatically proceed to load a data instance associated with a status attribute if the status attribute has a value of NEW.

Validation checks are typically carried out by the server upon data instances that are received by the server from the service providers, and validation checks are also typically carried out by client devices upon data instances that are received from the server. The validation checks carried out by the server are often different to the validation checks carried out by the client, and any of the validation checks carried out by the client device may be changed without notice to the server device. A validation check may for example comprise checking that a data instance is sufficiently up-to-date, or checking the data that the data instance contains is specified to be correct within tighter than given tolerance.

Accordingly, each status attribute within the collection of status attributes that is associated with the first one of the client devices may take values further comprising a value indicating that the data instance associated with the status attribute has been rejected by the first one of the client devices, for example due to failing a validation check that is carried out by the first one of the client devices after it has loaded the data instance.

Therefore, using the status attribute, a client device can automatically flag back to the server device that the data instance has failed the client device's validation check. There is thus no need to accommodate multiple different communication methods by which various clients may notify that a particular data instance has failed the client's validation checks. Instead, a central log of the status of each data instance with respect to each client can be kept and maintained within the server by way of the status attributes, with the status attributes being used to identify which data instances in the data repository require attention as a result of having failed the validation checks of one or more clients.

The value of a status attribute may for example be set to VALIDATED by a client device if the data instance corresponding to the status attribute has passed the client device's validation checks. If the data instance fails the client device's validation checks, then the client may set the value of the status attribute to REJECTED.

Advantageously, the server may be configured to receive the data instances from the service providers within data feeds, each data feed providing a stream of data instances. The data repository may be configured to store the data instances by data feed, by date, and by version number.

The server may be configured to format the data instances received within the data feeds before storing the data instances in the data repository, for example so that the data instances are all held in a common format. Advantageously, the client devices may be configured to handle the common format, rather than being required to handle a variety of formats that may be used by the service providers.

Each successive data instance of a data feed may be an update of preceding data instances of the data feed, and the data repository may be configured to store both the successive data instance and the preceding data instances. Maintaining a history of all the data instances in this manner means that the client devices are able for audit purposes to determine which data instances were available on which dates, and which of these data instances were actually loaded by the client device, by looking at the status attributes associated with the data instances.

Advantageously, the client repository may provide a client API to each client device, the client API comprising the collection of status attributes for the client device. The client API (Application Programming Interface) may also comprise other information relevant to the client device, for example which data feeds the client device is interested in, and therefore for which data instances in the data repository the client API should store status attributes.

The client API may provide a LIST FEEDS function, which the client device can initiate to receive a list of the data feeds available to the client device. For example, the client device may make a LIST FEEDS request to the server, and the server may return a list of data feeds to the client device which the client device can choose from.

The client API may provide a LIST UPDATES function, which the client device can initiate to receive a list of updated data instances for the client device, the list based upon the values of the status attributes for the client device.

The client API may provide a FETCH DATA function, which the client device can initiate to receive the latest data instance of a data feed specified by the client device. For example, the client device may send a FETCH DATA request to the server that specifies a particular data feed, and the server may send the most recent data instance of that data feed to the client device.

The client API may provide a LIST HISTORY function, which the client device can initiate to receive a list of data instances for a date specified by the client device, the list based upon the values of the status attributes for the client device.

Advantageously, the client API may allow specification of a mode parameter by the client device in connection with LIST UPDATES, FETCH DATA, or LIST HISTORY functions, the mode parameter indicating that the client wishes to receive data instances or a list of data instances having status attribute value(s) corresponding to the mode parameter.

For example, the client device may make a LIST UPDATES request to the server, the request including a mode parameter corresponding to a NEW status attribute value, and the server may return a list of all the data instances which have a status attribute value of NEW indicating that the data instances have yet to be loaded by the client device.

The client device may make a FETCH DATA request to the server, the request including a mode parameter indicating that the client device wishes to receive data instances having status attribute value(s) corresponding to the mode parameter.

The client device may make a LIST HISTORY request to the server that specifies a particular date and a mode parameter, the request indicating that the client device wishes to receive a list of data instances for that date having status attribute value(s) corresponding to the mode parameter.

The client API may provide a PUT function, which the client device can initiate to set the status attribute for a particular data instance. For example, a client device may make a PUT request to set the value of a status attribute associated with a data instance to VALIDATED once the data instance has passed the client device's validation checks.

According to a second aspect of the invention, there is provided a data distribution method according to the appended claim 13.

The storing in the client repository of status attributes associated with a data instance, may comprise adding status attributes into the collections of status attributes that correspond to client devices for which the new data instance is relevant. Accordingly, every collection of status attributes may not comprise a status attribute for every data instance. A collection of status attributes may only comprise status attributes for the data instances that the client device associated with the collection of status attributes is interested in.

Alternatively, every collection of status attributes in the client repository may comprise a status attribute for every data instance that is in the data repository.

Embodiments of the invention will now be described by way of non-limiting example only and with reference to the accompanying drawings, in which:
Fig. 1 shows a schematic block diagram of a data distribution system according to an embodiment of the invention;
Fig. 2 shows a flow diagram of a data distribution method which may be implemented using the data distribution system of Fig. 1;
Fig. 3 shows an illustrative diagram of data instances being received on different days from different client devices;
Fig. 4 shows a state diagram of various values that a status attribute may take; and
Fig. 5 shows a schematic diagram of an Application Programming Interface (API) suitable for provision by a server to a client device.

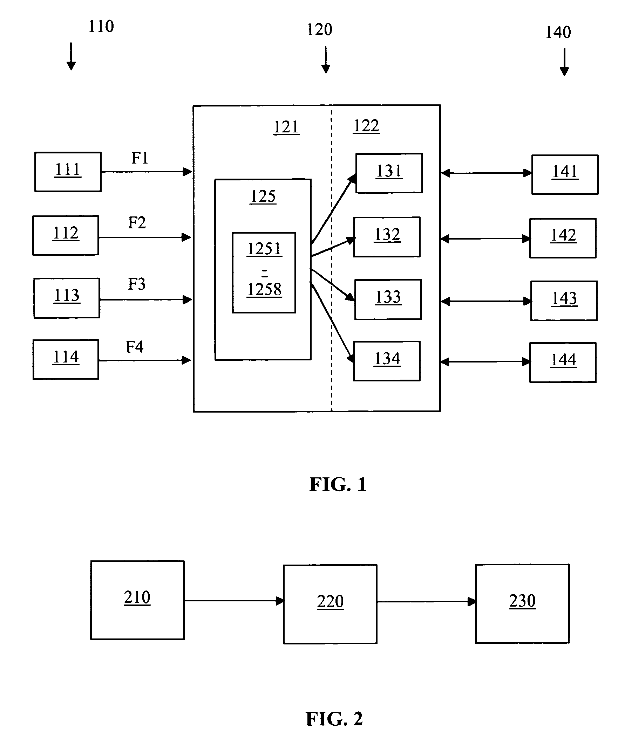

An embodiment of the invention will now be described with reference to the schematic diagram of Fig. 1, which shows a data distribution system including a service provider side 110, a server 120, and a client side 140.

The service provider side 110 comprises a plurality of service providers 111 - 114, and the client side 140 comprises a plurality of client devices 141 - 144. The server 120 comprises a data repository 121 that stores data instances 125, and a client repository 122 that stores a plurality of collections of status attributes 131 - 134.

For illustratory purposes, the data instances 125 are shown to comprise eight data instances 1251 - 1258. There is one collection of status attributes for each respective client device, such that the collection of status attributes 131 corresponds to the client device 141, the collection of status attributes 132 corresponds to the client device 142, the collection of status attributes 133 corresponds to the client device 143, and the collection of status attributes 134 corresponds to the client device 144.

Each of the service providers 111 - 114 supplies a respective data feed F1 - F4 to the server 120, and the server 120 receives the data feeds, and stores data instances 125 that are contained within the data feeds into the data repository 121.

The server 120 is configured to format the data instances received within the data feeds F1 - F4 before storing the data instances in the data repository 121, such that the data instances are all held in a common format. The client devices 141 - 144 are all configured to handle the common format.

Each collection of status attributes comprises a status attribute for each one of the data instances 125 that are relevant to the associated client device. For example, if the data instances relevant to the client device 141 are the data instances 1251, 1254, and 1256, then the collection of status attributes 131 for the client device 141 will store three status attributes corresponding to the three data instances 1251, 1254, and 1256. Each status attribute indicates the state of the corresponding data instance with respect to the client device 141.

Referring to Fig. 2, a data distribution method utilising the data distribution system of Fig. 1 comprises firstly receiving 200 a data instance from a service provider, secondly storing 210 the data instance within the data repository, and thirdly storing 220 status attributes associated with the data instance into collections of status attributes, the status attributes being stored into the collections of status attributes that correspond to client devices for which the new data instance is relevant.

For example, the step of receiving 200 a new data instance from a service provider may comprise receiving a data instance 1252 within a data feed F1 from service provider 111, the step of storing 210 the new data instance within the data repository may comprise storing the data instance 1252 into the data repository 121, and the step of storing 220 status attributes associated with the data instance into collections of status attributes may comprise storing a status attribute into each of the collections of status attributes 131 and 133, in a case where the client devices 141 and 143 are interested in the data feed F1 and the client devices 142 and 144 are not interested in the data feed F1.

The server may for example determine which collections of status attributes require a status attribute adding for the data instance 1252, based upon a list of the data feeds that each client device is interested in. The list may be stored together with the collection of status attributes for each client device.

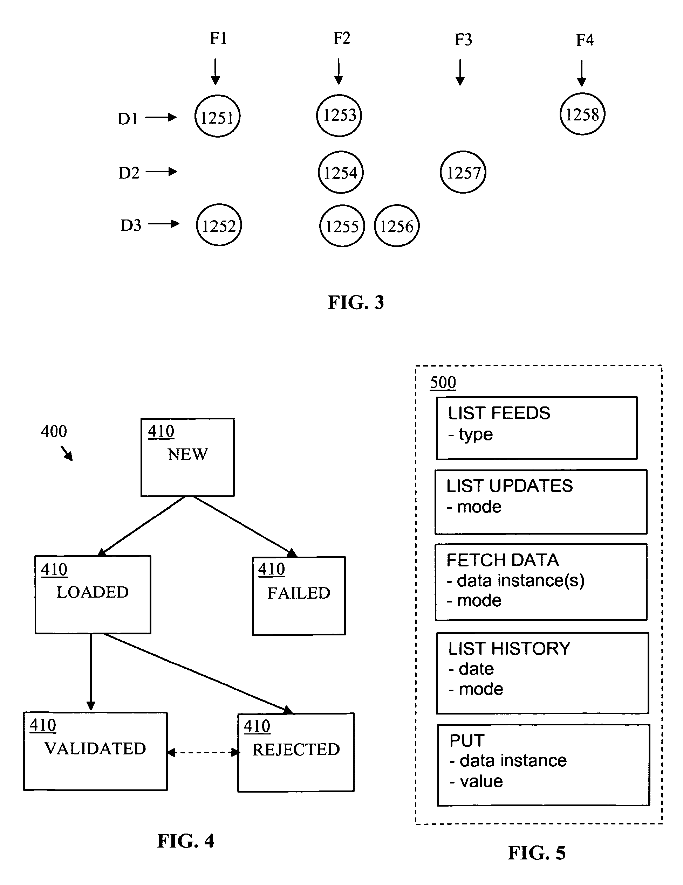

An example of the storage of data instances in the data repository 121 of Fig. 1 will now be described with reference to Fig. 3, which shows the data instances 1251 - 1258 being received by the server 120 from the data feeds F1 - F4 over a period of three days D1 - D3.

Specifically, Fig. 3 shows that the data instances 1251, 1253, and 1258 were received from respective data feeds F1, F2, and F4 (corresponding to respective service providers 111, 112, and 114) on the first day D1, that the data instances 1254 and 1257 were received from respective data feeds F2 and F3 (corresponding to respective service providers 112 and 113) on the second day D2, and that the data instances 1252, 1255, and 1256 were received on the third day D3. The data instance 1252 was received from the data feed F1, and the data instances 1255 and 1256 were both received from the data feed F2 at different times of day to one another.

Each data instance is stored within the data repository 121 according to which data feed it was received from, which date it was received, and the version number. The version number is set according to how many updated data instances have been received during the current day, therefore the data instances 1251 - 1255 and 1257 all have a version number of 1, and the data instance 1256 has a version number of 2 since it was the second data instance to be received on day D3 for the data feed F2. Each data instance may be stored in a memory location corresponding to a particular data feed/day/instance, and/or each data instance may be stored with metadata indicating the particular data feed/day/instance.

Each successive data instance of a data feed is an update of preceding data instances of the data feed. Accordingly, the data instance 1252 supersedes the data instance 1251 since it is the most up-to-date data from data feed F1, the data instance 1256 supersedes the data instances 1253, 1254, and 1255, since it is the most up-to-date data from data feed F2, and the most up-to-date data for data feeds F3 and F4 are data instances 1257 and 1258 respectively. All of the data instances 1251 - 1258 are still maintained in the data repository (and status attributes for them are still maintained in the collections of status attributes), even although the data instances 1251, 1253, and 1255 have all been superseded, so that checks upon the statuses of historical data instances can be performed if desired.

An example of the different status attribute values that a status attribute may take will now be described with reference to Fig. 4. Fig. 4 shows a state diagram 400 of the values that a status attribute 410 may take, following the status attribute's creation in a collection of status attributes, as a result of the server's receipt of a new data instance which a client device associated with the collection of status attributes is interested in.

Whether the client device is interested in a data instance may be determined according to which service provider or data feed that the data instance was received from, the client device being known to be interested in that service provider or data feed according to a list of service providers or data feeds. Alternatively, the client device may simply be assumed to be interested in all data instances.

When the status attribute is first created, it takes a value of NEW, indicating that the data instance which corresponds to the status attribute is new to the client device that is associated with the status attribute collection of which the status attribute forms part.

When the client device loads the data instance, the status attribute value may be changed to LOADED if the load was successful, or FAILED if the load was unsuccessful.

Once the data instance is successfully loaded to the client device, the client device performs a validation check upon the data instance and the status attribute value may be changed to VALIDATED if the validation check was passed, or REJECTED if the validation check was not passed.

For example, a new status attribute may be created in the status attribute collection 133 corresponding to the client device 143 when the data instance 1252 is stored in the data repository 121, following the data instance's receipt from the service provider 111 in data feed F1. Upon creation of the new status attribute, the new status attribute is assigned a value of NEW, since the data instance is new to the client device 143.

Subsequently, the client device 143 becomes aware that the new data instance 1252 is available by reading the status attribute value of NEW from the server 120, and the client 143 loads the data instance 1252 from the server 120. The status attribute may be modified to a value of LOADED if the load was successful, or FAILED if the load failed, for example due to a failure of the communication link between the server and the client device. The load may then be re-attempted at a later time.

Once the data instance 1252 is loaded, the client performs a validation check upon the data instance 252, and changes the value of the status attribute to VALIDATED if the validation checks are passed, or REJECTED if the validation checks are failed, for example due to the client requiring data with a closer data tolerance than the data tolerance of the data instance 1252. The value may move between VALIDATED and REJECTED, for example if the client device determines that the data instance is sufficient for its requirements after all, or if the client device raises its data validation requirements and re-loads the data instances with the new data validation requirements.

The communications between the server 120 and each client device 141 - 143 may be governed by an Application Programming Interface (API) that is provided by the server 120 to each client device. The API for each client may be considered to comprise the collection of status attributes that is relevant to the client, since these are the status attributes with which the client API will operate.

Fig. 5 shows a schematic diagram of a client API 500 that is provided by the server 120 to each of the client devices 141 - 144. Each client device uses the client API to communicate to the server 120 by way of various commands that operate upon the collection of status attributes that is associated with the client device.

Various API functions that may be initiated by each client device will now be described with reference to Fig. 5, and using the client device 141 as an example.

The client API 500 provides a LIST FEEDS function, which the client device 141 can initiate to receive a list of the data feeds F1 - F4 available to the client device. The client device 141 initiates the LIST FEEDS function by making a LIST FEEDS request to the server 120 together with a type parameter specifying the type of data feeds for which the client is interested in, for example data feeds F1 and F2 that provide data instances of a certain type or category.

The list of data feeds F1 and F2 is returned to the client device 141 and is automatically stored in the client API as a record of the feeds that the client is interested in. Alternatively, the client device 141 may directly specify to the client API which data feeds the client device is interested in once the client device has received the list of feeds.

A status attribute is added to the collection of status attributes 131 for the client device 141 each time a new data instance is received by the server 120 from one of the feeds F1 or F2, since the feeds F1 and F2 are on the list of feeds that the client is interested in.

The client API 500 also provides a LIST UPDATES function, which the client device 141 may for example initiate to receive a list of updated data instances for the client device, the list based upon the values of the status attributes in the collection of status attributes 131 for the client device. The client device 141 initiates the LIST UPDATES function by making a LIST UPDATES request to the server 120 together with an optional mode parameter. The mode parameter specifies that only certain types of data instances should be included in the list, for example data instances that have a status attribute value of NEW.

The list of data instances is returned to the client device 141, for example referring to Fig. 3 the list may designate the data instances 1252 and 1256, if the other data instances 1251, 1253, 1254, 1255 of the data feeds F1 and F2 had already been loaded by the client device 141 and had their status attribute values set to LOADED by the client device 141 at an earlier time. Accordingly, the LIST UPDATES function allows the client device 141 to discover that the two new data instances 1252 and 1256 have become available for download.

The client API 500 also provides a FETCH DATA function, which the client device may for example initiate to receive the latest data instance of a data feed specified by the client device. The client device 141 initiates the FETCH DATA function by making a FETCH DATA request to the server 120 together with a specification of the data instance that is required and an optional mode parameter.

The data instance that is required may be specified by the data feed, for example the value "F1 may be included in the request if the latest data instance 1252 from the data feed F1 is required by the client device. Alternatively, a given data instance may be fully specified by the data feed, the date of the data instance, and the version of the data instance, due to the storage of the data in the data repository 121 according to the structure shown in Fig. 2

The optional mode parameter provides substantially the same function as in the LIST UPDATES function, for example the mode parameter may specify that the data instance(s) of a specified data feed should only be downloaded the data instance(s) have specified status attribute value(s).

The client API 500 also provides a LIST HISTORY function, which the client device may for example initiate to receive a list of data instances for a date specified by the client device, the list based upon the values of the status attributes for the client device. The client device 141 initiates the LIST HISTORY function by making a LIST HISTORY request to the server 120 together with a specification of the date and an optional mode parameter.

For example, referring to Fig. 3, the client device 141 may make a LIST HISTORY request to the server 120 that specifies a date of D1, and a mode parameter that specifies a status attribute value of VALIDATED. Then the server 120 will return a list designating the data instances 1251 and 1253, since these are the data instances that were previously loaded and validated by the client device 141 on day D1. Note that data instance 1258 is not included as there is no status attribute in the collection of status attributes 131 that corresponds to data instance 1258, because data instance 1258 was received from data feed F4 rather than data feeds F1 or F2, data feeds F1 and F2 being the only data feeds that client device 141 was interested in.

The client API 500 also provides a PUT function, which the client device can initiate to set the value of the status attribute for a particular data instance. The client device 141 initiates the PUT function by making a PUT request to the server 120 together with a specification of the data instance and the status attribute value that is to be set.

For example, after successfully loading the data instance 1252 the client device 141 makes a PUT request to the server 120 that specifies data feed F1, date D3, and version 1 to designate the data instance 1252, and the value LOADED to indicate that the value of the status attribute that is associated with the designated data instance 1252 should be changed to LOADED.

Once the client device has carried out a validation check upon the data instance 1252, the PUT request may be made by the client device 141 again to change the status attribute value to VALIDATED or REJECTED as appropriate.

The various functions of the API above may be used by client devices to query the data instances in the data repository 121. Further parameters may be included with the API requests to further refine the requests. Further API functions may also be provided as will be apparent to the skilled person, for example to upload or remove data instances or upload or remove metadata associated with data instances.

The data processing system and method of the invention may be applied to a wide variety of data types which are to be obtained from different service providers and provided to different client devices, although is particularly suited to data types that are frequently updated over time and which are subject to validation checks by client devices.

The communication protocols provided by the different client API's may vary to one another, for example if a particular client requires the ability to run queries that are not required by other clients.

The service providers may for example be financial benchmarking data providers, the data instances may for example be financial benchmarking data, and the client devices may be consumers of financial benchmarking data.

Further embodiments falling within the scope of the appended claims will also be apparent to the skilled person.

## Claims

1. A data distribution system comprising a plurality of service providers (111 - 114) connected to a server (120), and a plurality of client devices (141 - 144) connected to the server (120), wherein the server (120) comprises a data repository (121) that stores data instances (125), and a client repository (122), **characterised in that**:
the client repository stores for each client device a respective collection of status attributes (131 - 134), each collection of status attributes indicating the statuses of the data instances (125) with respect to the respective client device;
the server (120) is configured to receive the data instances from the service providers within data feeds (F1 - F4), each data feed providing a stream of data instances (1251 - 1258); and
wherein the server (120) is configured to create a new status attribute within the collection of status attributes that is associated with a first one of the client devices for each newly received data instance, the new status attribute taking a value (NEW) indicating that the newly received data instance has yet to be loaded by the first one of the client devices.

2. The data distribution system of claim 1, wherein each status attribute within the collection of status attributes (131) that is associated with the first one of the client devices (141) can take a value (LOADED) indicating that the data instance associated with the status attribute has been loaded by the first one of the client devices.

3. The data distribution system of claim 2, wherein each status attribute within the collection of status attributes (131) that is associated with the first one of the client devices (141) can take values further comprising:
- a value (VALIDATED) indicating that the data instance associated with the status attribute has passed a validation check carried out upon the data instance by the first one of the client devices (141); and
- a value (REJECTED) indicating that the data instance associated with the status attribute has failed the validation check.

4. The data distribution system of any preceding claim, wherein the data repository (121) is configured to store the data instances by feed (F1 - F4), by date (D1 - D3), and by version number.

5. The data distribution system of any preceding claim, wherein the server (120) is configured to format the data instances (1251 - 1258) received within the data feeds before storing the data instances in the data repository (121).

6. The data distribution system of any preceding claim, wherein each successive data instance (1252, 1256, 1257, 1258) of a data feed (F1 - F4) is an update of preceding data instances (1251, 1253, 1254, 1255) of the data feed, and wherein the data repository (121) is configured to store both the successive data instance and the preceding data instances.

7. The data distribution system of any preceding claim, wherein the client repository (122) provides a client API to each client device (141 - 144), the client API comprising the collection of status attributes (131 - 134) for the client device.

8. The data distribution system of claim 7, wherein the client API specifies which data feeds (F1, F2) are relevant to the client device (141), and therefore for which data instances (1251 - 1256) in the data repository (121) the client API should store status attributes.

9. The data distribution system of claim 7 or 8, wherein the client API provides a LIST FEEDS function, which the client device (141) can initiate to receive a list of the data feeds (F1, F2) available to the client device.

10. The data distribution system of claim 7, 8, or 9, wherein the client API provides at least one of:
- a LIST UPDATES function, which the client device (141) can initiate to receive a list of updated data instances (1252, 1256) for the client device, the list based upon the values (NEW) of the status attributes for the client device;
- a FETCH DATA function, which the client device (141) can initiate to receive the latest data instance (1252) of a data feed (F1) specified by the client device; and
- a LIST HISTORY function, which the client device (141) can initiate to receive a list of data instances (1251, 1253) for a date (D1) specified by the client device, the list based upon the values (LOADED, VALIDATED) of the status attributes for the client device (141).

11. The data distribution system of claim 10, wherein the client API allows specification of a mode parameter (-mode) in connection with the LIST UPDATES, FETCH DATA, or LIST HISTORY functions, the mode parameter indicating that the client (141) wishes to receive data instances or a list of data instances having status attribute value(s) corresponding to the mode parameter.

12. The data distribution system of any one of claims 7 - 11, wherein the client API provides a PUT function, which the client device (141) can initiate to set the value (LOADED, VALIDATED, REJECTED) of the status attribute for a particular data instance (1252).

13. A data distribution method for distributing data from a plurality of service providers (111 - 114) to a plurality of client devices (141 -144), comprising:
receiving (210) data instances (125) from the service providers within data feeds (F1 - F4), each data feed providing a stream of data instances (1251 - 1258);
storing (220), in a data repository (121), the data instances; and
storing (230), in a client repository (122), status attributes associated with the data instances,
wherein the client repository stores for each client device (141 - 144) a respective collection of status attributes (131 - 134), each collection of status attributes indicating the statuses of the data instances with respect to the respective client device; and
wherein the method further comprises creating a new status attribute within the collection of status attributes that is associated with a first one of the client devices for each newly received data instance, the new status attribute taking a value of (NEW) indicating that the newly received data instance has yet to be loaded by the first one of the client devices.

## Patentansprüche

1. Datenverteilungssystem, umfassend eine Mehrzahl von Serviceprovidern (111 - 114), die mit einem Server (120) verbunden sind, und eine Mehrzahl von Kundenvorrichtungen (141 - 144), die mit dem Server (120) verbunden sind, wobei der Server (120) eine Datenablage (121), die Dateninstanzen (125) speichert, und eine Kundenablage (122) umfasst, **dadurch gekennzeichnet, dass**
die Kundenablage für jede Kundenvorrichtung eine entsprechende Sammlung von Statusattributen (131 - 134) speichert, wobei jede Sammlung von Statusattributen den Status der Dateninstanzen (125) in Bezug auf die entsprechende Kundenvorrichtung anzeigt;
der Server (120) so konfiguriert ist, dass er die Dateninstanzen von den Serviceprovidern innerhalb von Datenfeeds (F1 - F4) empfängt, wobei jedes Datenfeed einen Strom von Dateninstanzen (1251 - 1258) bereitstellt; und
wobei der Server (120) so konfiguriert ist, dass er ein neues Statusattribut innerhalb der Sammlung von Statusattributen erzeugt, das mit einer ersten Kundenvorrichtung für jede neu empfangene Dateninstanz verbunden ist, wobei das neue Statusattribut einen Wert (NEW) annimmt, der anzeigt, dass die neu empfangene Dateninstanz noch von der ersten Kundenvorrichtung zu laden ist.

2. Datenverteilungssystem nach Anspruch 1, wobei jedes Statusattribut innerhalb der Sammlung von Statusattributen (131), das mit der ersten Kundenvorrichtung (141) verbunden ist, einen Wert (LOADED) annehmen kann, der anzeigt, dass die mit dem Statusattribut verbundene Dateninstanz von der ersten Kundenvorrichtung geladen worden ist.

3. Datenverteilungssystem nach Anspruch 2, wobei jedes Statusattribut innerhalb der Sammlung von Statusattributen (131), das mit der ersten Kundenvorrichtung (141) verbunden ist, Werte annehmen kann, die ferner Folgendes umfassen:
- einen Wert (VALIDATED), der anzeigt, dass die mit dem Statusattribut verbundene Dateninstanz eine Validierungsprüfung bestanden hat, die durch die erste Kundenvorrichtung (141) an der Dateninstanz durchgeführt worden ist; und
- einen Wert (REJECTED), der anzeigt, dass die mit dem Statusattribut verbundene Dateninstanz die Validierungsprüfung nicht bestanden hat

4. Datenverteilungssystem nach einem der vorstehenden Ansprüche, wobei die Datenablage (121) so konfiguriert ist, dass sie die Dateninstanzen nach Feed (F1 - F4), nach Datum (D1 - D3) und nach Versionsnummer speichert.

5. Datenverteilungssystem nach einem der vorstehenden Ansprüche, wobei der Server (120) so konfiguriert ist, dass er die innerhalb der Datenfeeds empfangenen Dateninstanzen (1251 - 1258) formatiert, bevor er die Dateninstanzen in der Datenablage (121) speichert.

6. Datenverteilungssystem nach einem der vorstehenden Ansprüche, wobei jede folgende Dateninstanz (1252, 1256, 1257, 1258) eines Datenfeeds (F1-F4) ein Update von vorhergehenden Dateninstanzen (1251, 12253, 1254, 1255) des Datenfeeds ist und wobei die Datenablage so konfiguriert ist, dass sie sowohl die folgende Dateninstanz als auch die vorhergehenden Dateninstanzen speichert.

7. Datenverteilungssystem nach einem der vorstehenden Ansprüche, wobei die Kundenablage (122) jeder Kundenvorrichtung (141 - 144) eine API bereitstellt, wobei die Kunden-API die Sammlung von Statusattributen (131 - 134) für die Kundenvorrichtung umfasst

8. Datenverteilungssystem nach Anspruch 7, wobei die Kunden-API angibt, welche Datenfeeds (F1, F2) für die Kundenvorrichtung (141) relevant sind, und daher angibt, für welche Dateninstanzen (125 - 1256) in der Datenablage (121) die Kunden-API Statusattribute speichern soll.

9. Datenverteilungssystem nach Anspruch 7 oder 8, wobei die Kunden-API eine LIST FEEDS-Funktion bereitstellt, die die Kundenvorrichtung (141) initiieren kann, um eine Liste der Datenfeeds (F1, F2) zu empfangen, die für die Kundenvorrichtung verfügbar sind.

10. Datenverteilungssystem nach Anspruch 7, 8 oder 9, wobei die Kunden-API mindestens eine der folgenden Funktionen bereitstellt:
- eine LIST UPDATES-Funktion, die die Kundenvorrichtung (141) initiieren kann, um eine Liste von aktualisierten Dateninstanzen (1252, 1256) für die Kundenvorrichtung zu empfangen, wobei die Liste auf den Werten (NEW) der Statusattribute für die Kundenvorrichtung beruht;
- eine FETCH DATA-Funktion, die die Kundenvorrichtung (141) initiieren kann, um die letzte Dateninstanz (1252) eines Datenfeeds (F1), das durch Kundenvorrichtung angegeben wird, zu empfangen; und
- eine LIST HISTORY-Funktion, die die Kundenvorrichtung (141) initiieren kann, um eine Liste von Dateninstanzen (1251, 1253) für ein Datum (D1), das von der Kundenvorrichtung angegeben wird, zu empfangen, wobei die Liste auf den Werten (LOADED, VALIDATED) der Statusattribute für die Kundenvorrichtung (141) beruht.

11. Datenverteilungssystem nach Anspruch 10, wobei die Kunden-API die Angabe eines Modus-Parameters (-Modus) in Verbindung mit den LIST UPDATES-, FETCH DATA- oder LIST HISTORY-Funktionen ermöglicht, wobei der Modus-Parameter anzeigt, dass der Kunde (141) Dateninstanzen oder eine Liste von Dateninstanzen mit Statusattributwerten, die dem Modus-Parameter entsprechen, empfangen möchte.

12. Datenverteilungssystem nach einem der Ansprüche 7-11, wobei Kunden-API eine PUT-Funktion bereitstellt, die die Kundenvorrichtung (141) initiieren kann, um den Wert (LOADED, VALIDATED, REJECTED) des Statusattributs für eine bestimmte Dateninstanz (1252) einzustellen.

13. Datenverteilungsverfahren zum Verteilen von Daten von einer Mehrzahl von Serviceprovidern (111 - 114) auf feine Mehrzahl von Kundenvorrichtungen (141 - 144), umfassend:
das Empfangen (210) von Dateninstanzen (125) von den Serviceprovidern innerhalb von Datenfeeds (F1 - F4), wobei jedes Datenfeed einen Strom von Dateninstanzen (1251 - 1258) bereitstellt;
das Speichern (220) der Dateninstanzen in einer Datenablage (121); und
das Speichern (230) der mit den Dateninstanzen verbundenen Statusattribute in einer Kundenablage (122),
wobei die Kundenablage für jede Kundenvorrichtung (141 - 144) eine entsprechende Sammlung von Statusattributen (131 - 134) speichert, wobei jede Sammlung von Statusattributen den Status der Dateninstanzen in Bezug auf die entsprechende Kundenvorrichtung anzeigt; und
wobei das Verfahren ferner das Erzeugen eines neuen Statusattributs innerhalb der Sammlung von Statusattributen umfasst, das mit einer ersten Kundenvorrichtung für jede neu empfangene Dateninstanz verbunden ist, wobei das neue Statusattribut einen Wert (NEW) annimmt, der anzeigt, dass die neu empfangene Dateninstanz noch von der ersten Kundenvorrichtung zu laden ist.

## Revendications

1. Système de distribution de données comprenant une pluralité de fournisseurs de services (111 - 114) connectés à un serveur (120), et une pluralité de dispositifs clients (141 - 144) connectés au serveur (120), dans lequel le serveur (120) comprend un référentiel de données (121) qui stocke des instances de données (125), et un référentiel de clients (122), **caractérisé en ce que** :
le référentiel de clients stocke pour chaque dispositif client une collection respective d'attributs de statut (131 - 134), chaque collection d'attributs de statut indiquant les statuts des instances de données (125) relativement au dispositif client respectif ;
le serveur (120) est configuré pour recevoir les instances de données en provenance des fournisseurs de services à l'intérieur d'alimentations de données (F1 - F4), chaque alimentation de données fournissant un flux d'instances de données (1251 - 1258) ; et
dans lequel le serveur (120) est configuré pour créer un nouvel attribut de statut au sein de la collection d'attributs de statut qui est associée à un premier des dispositifs clients pour chaque instance de données nouvellement reçue, le nouvel attribut de statut prenant une valeur (NOUVEAU) indiquant que l'instance de données nouvellement reçue doit encore être chargée par le premier des dispositifs clients.

2. Système de distribution de données selon la revendication 1, **caractérisé en ce que** chaque attribut de statut au sein de la collection d'attributs de statut (131) qui est associée au premier des dispositifs clients (141) peut prendre une valeur (CHARGÉ) indiquant que l'instance de données associée à l'attribut de statut a été chargée par le premier des dispositifs clients.

3. Système de distribution de données selon la revendication 2, **caractérisé en ce que** chaque attribut de statut au sein de la collection de d'attributs de statut (131) qui est associée à un premier des dispositifs clients (141) peut prendre des valeurs comprenant en outre :
- une valeur (VALIDÉ) indiquant que l'instance de données associée à l'attribut de statut a réussi un contrôle de validation effectué sur l'instance de données par le premier des dispositifs clients (141) ; et
- une valeur (REJETÉ) indiquant que l'instance de données associée à l'attribut de statut a échoué au contrôle de validation.

4. Système de distribution de données selon l'une quelconque des revendications précédentes, **caractérisé en ce que** le référentiel de données (121) est configuré pour stocker les instances de données par alimentation (F1 - F4), par date (D1 - D3), et par numéro de version.

5. Système de distribution de données selon l'une quelconque des revendications précédentes, **caractérisé en ce que** le serveur (120) est configuré pour formater les instances de données (1251 - 1258) reçues à l'intérieur des alimentations de données avant de stocker les instances de données dans le référentiel de données (121).

6. Système de distribution de données selon l'une quelconque des revendications précédentes, **caractérisé en ce que** chaque instance de données successive (1252, 1256, 1257, 1258) d'une alimentation de données (F1 - F4) est une mise à jour d'instances de données précédentes (1251, 1253, 1254, 1255) de l'alimentation de données, et dans lequel le référentiel de données (121) est configuré pour stocker à la fois l'instance de données successive et les instances de données précédentes.

7. Système de distribution de données selon l'une quelconque des revendications précédentes, **caractérisé en ce que** le référentiel de clients (122) fournit une API client à chaque dispositif client (141 - 144), l'API client comprenant la collection d'attributs de statut (131 - 134) pour le dispositif client.

8. Système de distribution de données selon la revendication 7, **caractérisé en ce que** l'API client spécifie quelles alimentations de données (F1, F2) sont pertinentes pour le dispositif client (141), et par conséquent pour quelles instances de données (1251 - 1256) dans le référentiel de données (121) l'API client devrait stocker des attributs de statut.

9. Système de distribution de données selon la revendication 7 ou 8, **caractérisé en ce que** l'API client fournit une fonction ALIMENTATIONS DE LISTE, que le dispositif client (141) peut initier pour recevoir une liste des alimentations de données (F1, F2) disponibles pour le dispositif client.

10. Système de distribution de données selon la revendication 7, 8 ou 9, **caractérisé en ce que** l'API client fournit au moins une parmi :
- une fonction MISES A JOUR DE LISTE, que le dispositif client (141) peut initier pour recevoir une liste d'instances de données mises à jour (1252, 1256) pour le dispositif client, la liste basée sur les valeurs (NOUVEAU) des attributs de statut pour le dispositif client ;
- une fonction EXTRACTION DE DONNÉES, que le dispositif client (141) peut initier pour recevoir la dernière instance de données (1252) d'une alimentation de données (F1) spécifiée par le dispositif client ; et
- une fonction HISTORIQUE DE LISTE, que le dispositif client (141) peut initier pour recevoir une liste d'instances de données (1251, 1253) pour une date (D1) spécifiée par le dispositif client, la liste basée sur les valeurs (CHARGÉ, VALIDÉ) des attributs de statut pour le dispositif client (141).

11. Système de distribution de données selon la revendication 10, **caractérisé en ce que** l'API client permet la spécification d'un paramètre de mode (-mode) en relation avec les fonctions MISES A JOUR DE LISTE, EXTRACTION DE DONNÉES, ou HISTORIQUE DE LISTE, le paramètre de mode indiquant que le client (141) souhaite recevoir des instances de données ou une liste d'instances de données ayant une(des) valeur(s) d'attribut de statut correspondant au paramètre de mode.

12. Système de distribution de données selon l'une quelconque des revendications 7 à 11, **caractérisé en ce que** l'API client fournit une fonction PUT, que le dispositif client (141) peut initier pour établir la valeur (CHARGÉ, VALIDÉ, REJETÉ) de l'attribut de statut pour une instance de données particulière (1252).

13. Procédé de distribution de données pour distribuer des données d'une pluralité de fournisseurs de services (111 - 114) à une pluralité de dispositifs clients (141 - 144), comprenant :
la réception (210) d'instances de données (125) en provenance des fournisseurs de services à l'intérieur d'alimentations de données (F1 - F4), chaque alimentation de données fournissant un flux d'instances de données (1251 - 1258) ;
le stockage (220), dans un référentiel de données (121), des instances de données ; et
le stockage (230), dans un référentiel de clients (122), d'attributs de statut associés aux instances de données,
dans lequel le référentiel de clients stocke pour chaque dispositif client (141 - 144) une collection respective d'attributs de statut (131 - 134), chaque collection d'attributs de statut indiquant les statuts des instances de données relativement au dispositif client respectif ; et
**caractérisé en ce que** le procédé comprend en outre la création d'un nouvel attribut de statut au sein de la collection d'attributs de statut qui est associée à un premier des dispositifs clients pour chaque instance de données nouvellement reçue, le nouvel attribut de statut prenant une valeur de (NOUVEAU) indiquant que l'instance de données nouvellement reçue doit encore être chargée par le premier des dispositifs clients.
